# EUROPEAN PATENT APPLICATION

(11) **EP 4 356 797 A1**
(43) Date of publication of application: **24.04.2024**
(21) Application number: 23204268.9
(22) Date of filing: 18.10.2023
(51) Int. Cl.: A47J 36/06

(54) **LID FOR COOKING CONTAINERS**

(30) Priority: 19.10.2022 IT 202200021525
(71) Applicant: De Nat, Martino, 31050 Ponzano Veneto (TV) (IT)
(72) Inventor: De Nat, Martino, 31050 Ponzano Veneto (TV) (IT)
(74) Representative: Frare, Paolo

(57) **Abstract**

The present finding refers to a lid (1) for cooking containers, comprising:
- a first section (2), central, which comprises a first lower surface (3) provided with at least a first flat region (4), such first section (2) presenting in plan an elongated conformation which develops longitudinally along a first axis (5), straight, parallel to the first flat region (4);
- gripping means (6) for lifting the lid (1), fixed to a first upper surface (7) of the first section (2), opposite to the first lower surface (3);
- two second sections (8a, 8b), hinged respectively to two opposite sides (2a, 2b) of the first section (2) so as to be able to rotate with respect to it around respective second axes (9a, 9b) parallel to the first axis (5) and spaced apart to one another, each of the second sections (8a, 8b) comprising a second lower surface (10a, 10b) which comprises at least a second flat region (11a, 11b), and a second upper surface (12a, 12b) facing away from the second lower surface (10a, 10b);
wherein the second sections (8a, 8b) can rotate around the respective second axes (9a, 9b) between a use position, wherein the second sections (8a, 8b) are arranged with the respective second flat regions (11a, 11b) coplanar with each other and with the first flat region (4) of the first section (2), and a storage position, wherein the second sections (8a, 8b) are rotated in such a way that the respective second upper surfaces (12a, 12b) face each other and the gripping means (6), so as to reduce the overall size, in plan, of the lid (1).

## Description

The present finding refers to a lid for cooking containers, such as pots, pans, saucepans, etc.

Nowadays, in order to close the open end of pots, pans, saucepans, and similar cooking containers, it is known using lids comprising a rigid cover element, generally flat or having a box-shaped conformation, conformed such as to be positioned on the edge of the open end of the cooking device, so as to reclose the latter.

Gripping means, such as for example a knob or a handle, adapted to facilitate the moving of the lid, are generally provided on the upper surface of the lid facing, with the lid applied to the cooking container, away from the latter.

However, such known-type solutions present a drawback.

Indeed, such known-type lids present, in plan, a relatively very large extension, and thus typically require large spaces to be stored after use.

Furthermore, particularly in the case of the lids adapted to be used in combination with large-sized cooking containers, the large extension in plan of the known-type lids involves a high difficulty in washing them, both in the case of hand washing and in the case of using a dishwasher, since in this latter case a large extension in plan of the lid can make the correct positioning of it inside the dishwasher difficult or impossible.

The main aim of the present finding is to solve the technical problems listed above, and thus to make a lid for a cooking container, such as for example a pot, a pan, a saucepan, etc., which can be used to effectively close such cooking container, and which at the same time requires, in order to be stored, a smaller space than that required by a known-type lid adapted to close the same cooking container.

In the scope of such aim, another object of the finding is to make a lid for a cooking container being easy to use.

The aim and the object according to the present finding are achieved by making a lid for cooking containers, comprising:
- a first section, central, which comprises a first lower surface provided with at least a first flat region, such first section presenting in plan an elongated conformation which develops longitudinally along a first axis, straight, parallel to the first flat region;
- gripping means for lifting the lid, fixed to a first upper surface of the first section, opposite to the first lower surface;
- two second sections, hinged respectively to two opposite sides of the first section so as to be able to rotate with respect to it around respective second axes parallel to the first axis and spaced apart to one another, the second sections each comprising a second lower surface which comprises at least a second flat region, and a second upper surface facing away from the second lower surface;
wherein the second sections can rotate around the respective second axes between a use position, wherein the second sections are arranged with the respective second flat regions coplanar with each other and with the first flat region of the first section, and a storage position, wherein the second sections are rotated in such a way that the respective second upper surfaces face each other and the gripping means, so as to reduce the overall size, in plan, of the lid.

Other advantageous features of the lid according to the finding are reported in the dependent claims.

The features and advantages of the present finding will be more apparent from the following exemplary and non-limiting description, referred to the attached schematic drawings in which:
- figure 1 is a schematic perspective view of a first advantageous embodiment of a lid according to the finding, in a use condition wherein such lid can reclose the open end of the cooking container to which such lid is intended to;
- figure 2 is a schematic plan view of some details of the lid of figure 1;
- figures 3 and 4 are schematic side and bottom views of a component of the lid of the preceding figures;
- figure 5 is a schematic plan view of the lid of the preceding figures, in the use condition;
- figure 6a is a schematic side view of the lid of the preceding figures, in the use condition, wherein some non-visible details were illustrated in a dotted line;
- figure 6b is a schematic front view of the lid of the preceding figures, in the use condition;
- figure 7 is a schematic plan view of the lid of the preceding figures, in a step of the passage from the use condition to the storage condition;
- figure 8 is a schematic side view of the lid of the preceding figures, in the same step illustrated in figure 7, wherein some non-visible details are illustrated in a dotted line;
- figure 9 is a schematic plan view of the lid of the preceding figures in a further step of the passage from the use condition to the storage condition, wherein some non-visible details are illustrated in a dotted line;
- figure 10 is a schematic side view of the lid of the preceding figures in the step illustrated in figure 9, wherein some non-visible details are illustrated in a dotted line;
- figure 11 is a schematic plan view of the lid of the preceding figures in the storage condition;
- figure 12 is a schematic front view of the lid of the preceding figures in the storage condition;
- figure 13 is a schematic perspective view of a second advantageous embodiment of the lid according to the finding, in a use condition wherein such lid can reclose the open end of the cooking container to which such lid is intended;
- figure 14 is a schematic plan view of the lid of preceding figure 13, in the use condition;
- figure 15a is a schematic side view of the lid of figure 13, in the use condition, wherein some non-visible details were illustrated in a dotted line;
- figure 15b is a schematic front view of the lid of figure 13, in the use condition;
- figure 16 is a schematic plan view of the lid of figure 13, in a step of the passage from the use condition to the storage condition;
- figure 17 is a schematic side view of the lid of figure 13, in the same step illustrated in figure 16, wherein some non-visible details were illustrated in a dotted line;
- figure 18 is a schematic plan view of the lid of figure 13 in a further step of the passage from the use condition to the storage condition, wherein some non-visible details were illustrated in a dotted line;
- figure 19 is a schematic side view of the lid of figure 13 in the step illustrated in figure 18, wherein some non-visible details were illustrated in a dotted line;
- figure 20 is a schematic plan view of the lid of figure 13 in the storage condition;
- figure 21 is a schematic front view of the lid of figure 13 in the storage condition;
- figure 22 is a schematic plan view of a third advantageous embodiment of the lid according to the finding, in the use condition;
- figure 23a is a schematic front view of the lid of figure 22 in an intermediate condition between the use condition and the storage condition.
- figure 23b is a schematic front view of the lid of figure 22 in the storage condition.

With reference to the attached figures, a lid for cooking containers, not illustrated, such as for example pots, pans, saucepans, etc., is overall indicated by number 1.

The lid 1 comprises a first section 2, central, which comprises a first lower surface 3 provided with at least a first flat region 4; such first flat region 4, such as for example in the advantageous examples illustrated in the attached figures, can coincide with the entire first lower surface 3 (which in this case is thus entirely flat), or, in other advantageous embodiments, can only affect one or more portions of the first lower surface 3, such as for example the perimetral edge of it.

The first section 2 presents in plan an elongated conformation which develops longitudinally along a first axis 5, straight, parallel to the first flat region 4.

The first section 2 can be advantageously made, entirely or partially, of metal, for example stainless steel, plastic material, glass, etc.

The lid 1 comprises gripping means 6 for lifting it, fixed to a first upper surface 7 of the first section 2, opposite to the first lower surface 3.

Advantageously, the gripping means 6 can comprise a knob, not illustrated, or a handle, for example a handle 6a, preferably conformed, in a side view, as an inverted U, to define a base 61, from which two arms 62a, 62b protrude, fixed, with their free ends, to the first upper surface 7 of the first section 2, so as to keep the base 61 spaced apart from such first upper surface 7.

The first upper surface 7 can be flat, such as in the advantageous examples illustrated in the attached figures, or can have a different conformation, for example curved.

The lid 1 comprises two second sections 8a, 8b, hinged respectively to two opposite sides 2a, 2b of the first section 2, so as to be able to rotate with respect to it around respective second axes 9a, 9b parallel to the first axis 5 and spaced apart to one another.

The second sections 8a, 8b each comprising a second lower surface 10a, 10b which comprises at least a second flat region 11a, 11b, and a second upper surface 12a, 12b, facing away from the second lower surface 10a, 10b.

In advantageous embodiments, such as for example those illustrated in the attached figures, the second flat region 11a, 11b coincides with the second lower surface 10a, 10b (which is thus entirely flat); in other advantageous embodiments, not illustrated, the second flat region 11a, 11b affects only part of the second lower surface 10a, 10b, for example the outer perimetral edge of it.

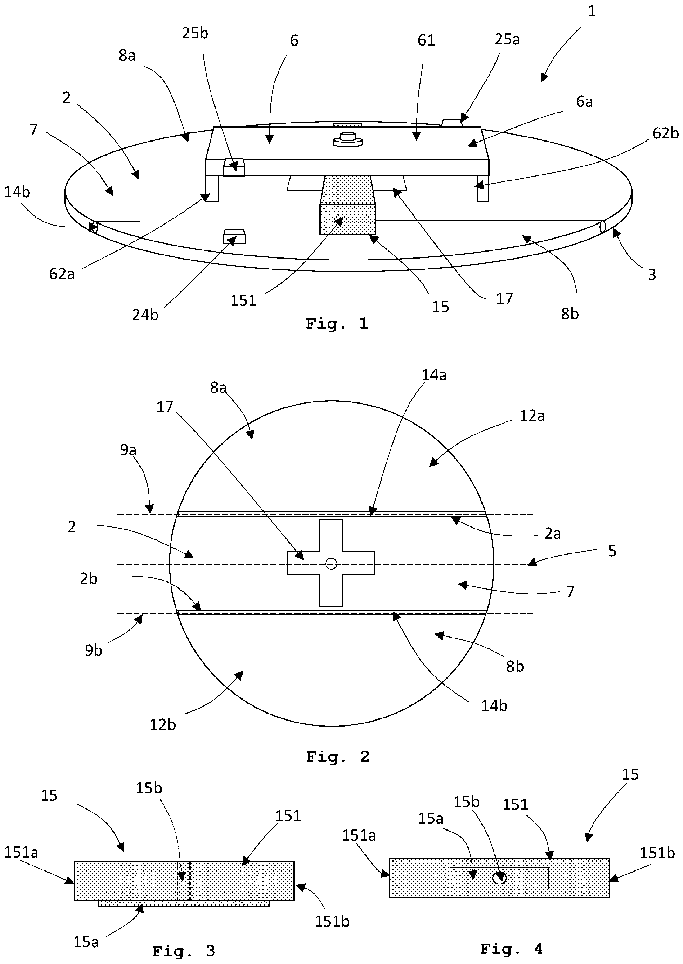

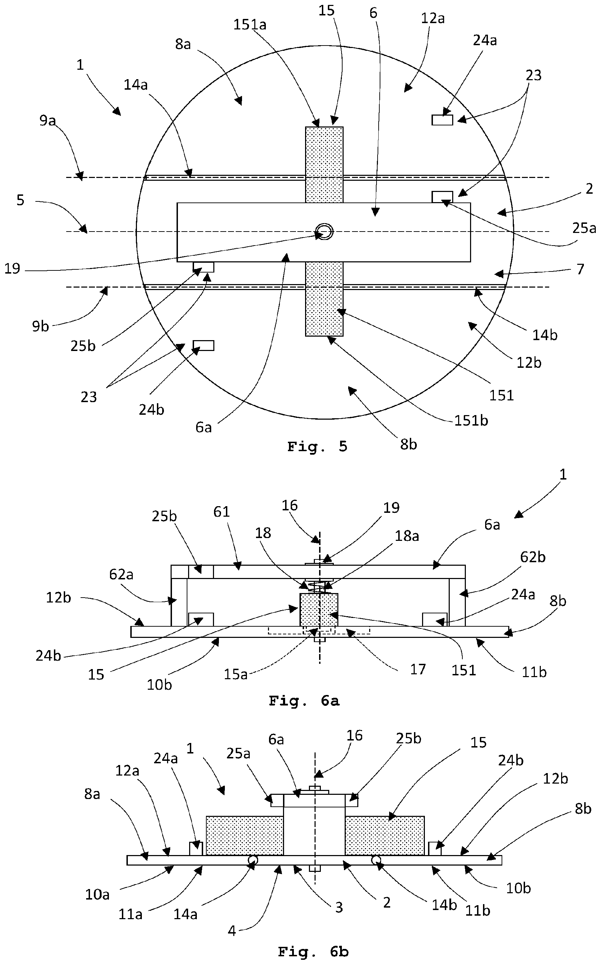

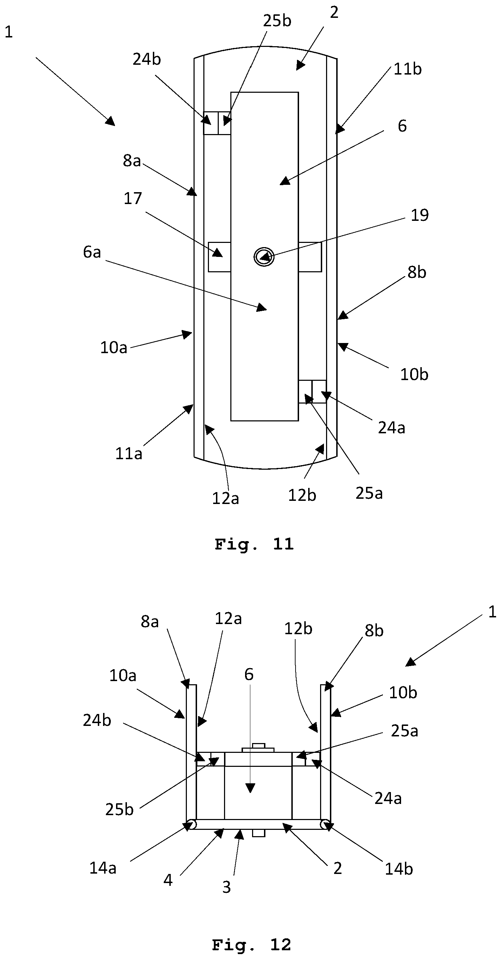

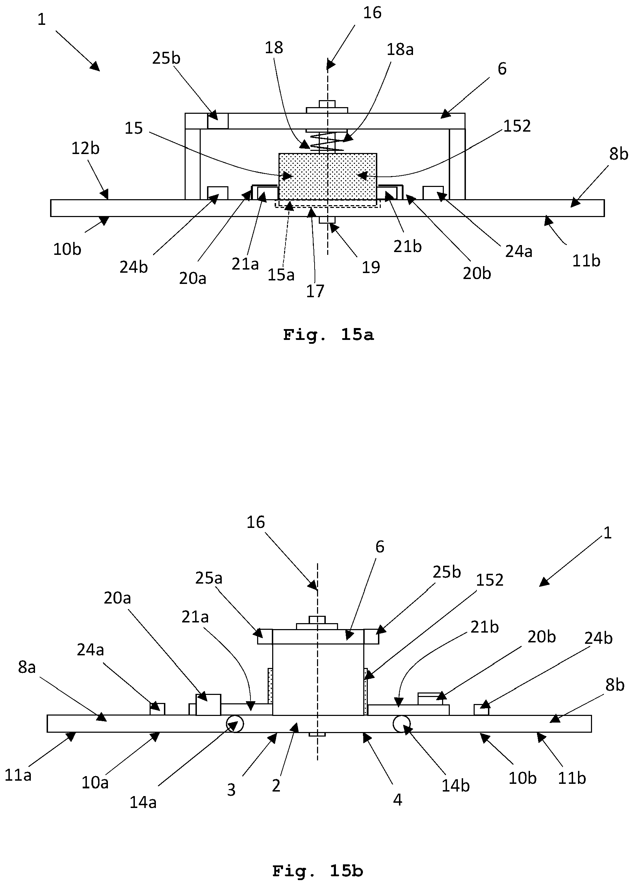

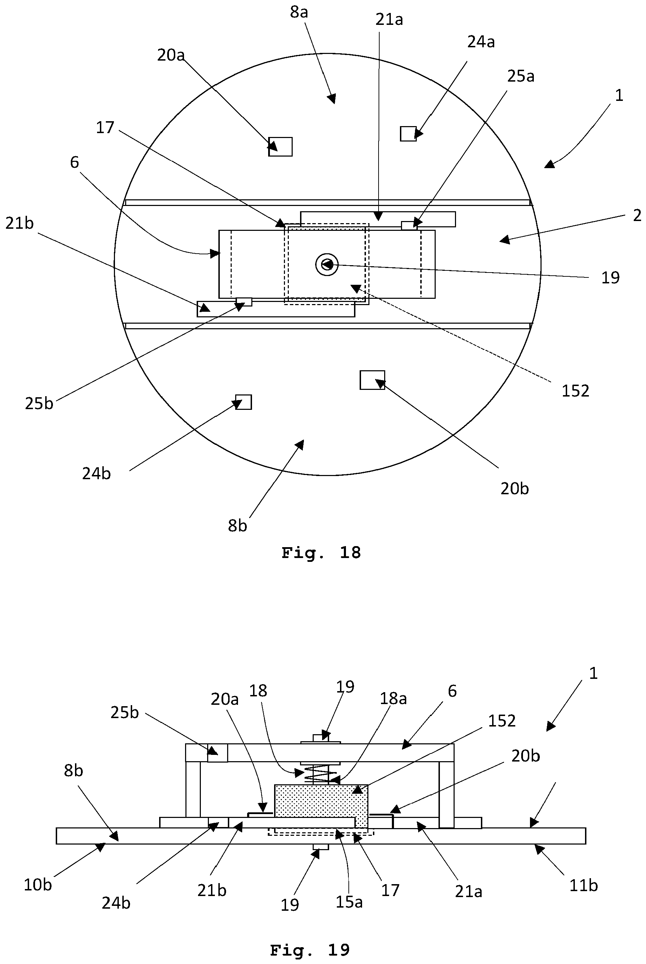

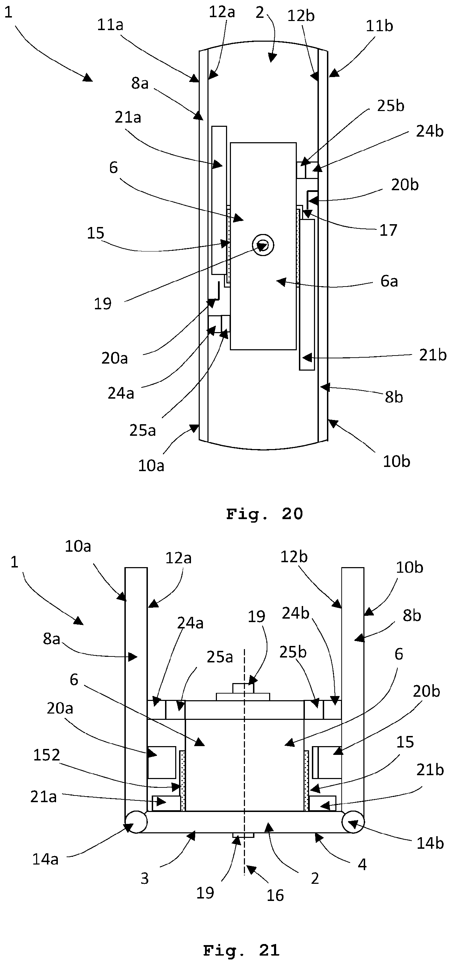

The second sections 8a, 8b can rotate around the respective second axes 9a, 9b between a use position, illustrated for example in figures 1, 2, 5 to 10, 13 to 19 and 22, wherein such second sections 8a, 8b are arranged with the respective second flat regions 11a, 11b coplanar with each other and with the first flat region 4 of the first section 2, and a storage position, illustrated for example in figures 11, 12, 20, 21, 23a, 23b, wherein the second sections 8a, 8b are rotated in such a way that the respective second upper surfaces 12a, 12b face each other and the gripping means 6, so as to reduce the overall size, in plan, of the lid 1.

The second sections 8a, 8b can be advantageously made, entirely or partially, of metal, for example stainless steel, plastic material, glass, etc.

Advantageously, the lid 1 comprises two first hinges 14a, 14b, for example so-called "book hinges" or "bar hinges" of known type, which connect respectively the second sections 8a, 8b to the first section 2, configured to allow the rotation of the second sections 8a, 8b from the use position to the storage position, and vice versa, and to prevent at the same time the rotation of such second sections 8a, 8b, starting from the use position, in the direction of rotation away from the storage position.

Advantageously, the lid 1 comprises first removable fixing means of the second sections 8a, 8b in the use position.

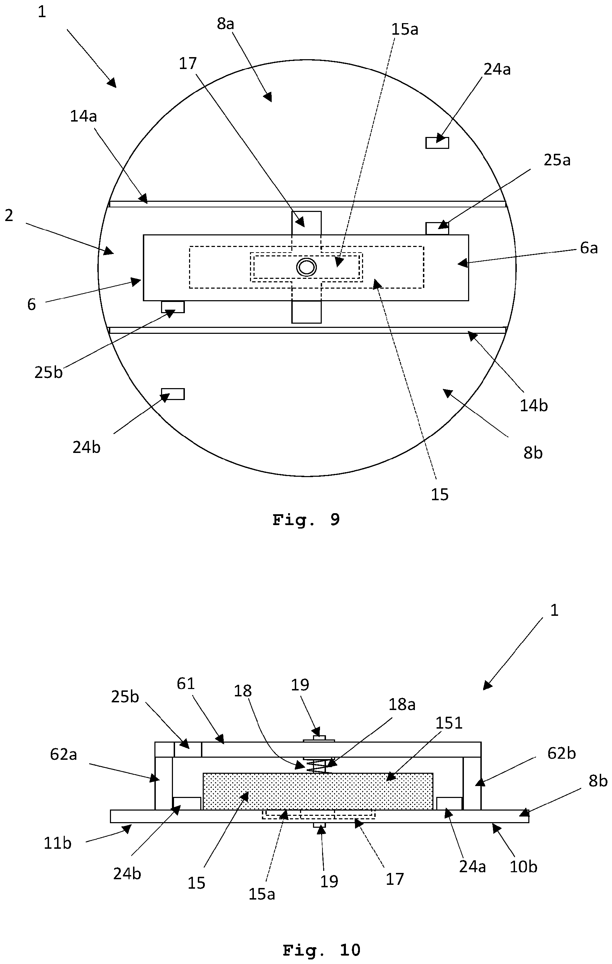

In an advantageous embodiment, the first removable fixing means comprise a rotating element 15, hinged to the first section 2 and rotating, around a third axis 16, perpendicular to the first flat region 4, between a locking position (illustrated for example in figures 1, 5, 6a, 6b, 14, 15a, 15b, 22), wherein the rotating element 15 protrudes from the first central section 2 and partially overlaps the second sections 8a, 8b, preventing their rotation towards the storage position, and a closing position (illustrated for example in figures 9, 10, 11, 12, 18, 19, 20, 21, 23a, 23b) in which the rotating element 15 does not protrude from the first central section 2, allowing the rotation of the second sections 8a, 8b from the use position towards the storage position.

Advantageously, the lid 1 comprises means to stably keep the rotating element 15, unless an external intervention, in the locking position or in the closing position; in advantageous embodiments, such as for example those illustrated in the attached figures, such means comprise a seat 17 obtained in the first upper surface 7 of the first section 2 and conformed, in plan, such as to stably house a counter-shaped portion 15a of the rotating element 15, only when such rotating element 15 is in the closing position or in the locking position.

In advantageous embodiments, such as for example those illustrated in figures 1 to 12, the seat 17 presents, in plan, a Greek-cross conformation, with a branch oriented parallel to the first axis 5, and the other branch perpendicular to the first; in this case, the portion 15a of the rotating element 15 is advantageously conformed, in plan, so as to be inserted in one or the other branch of the cross, respectively when the rotating element 15 is in the locking position or in the closing position.

In such advantageous embodiments, the portion 15a of the rotating element 15 is preferably, in plan, substantially rectangular, and having such a size to be inserted respectively in one or the other branch of the seat 17, in contact with the inner side walls of such branch, so as to prevent the rotation of the rotating element 15 until the portion 15a is inserted in the seat 17.

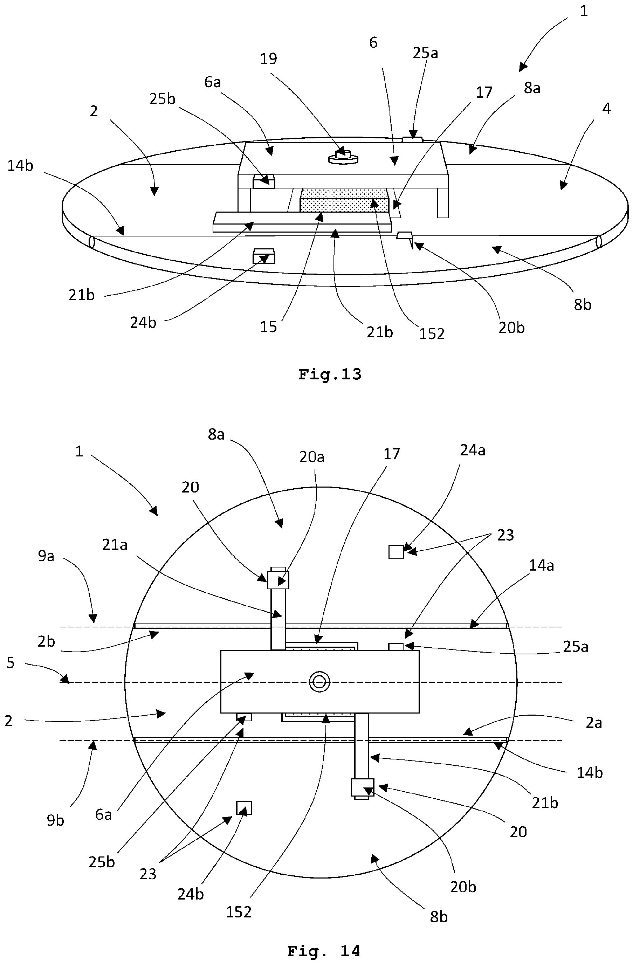

In advantageous embodiments, such as for example those illustrated in figures 13 to 23b, the seat 17 presents, in plan, a squared conformation; in this case, the rotating element 15 comprises a portion 15a which is advantageously, in plan, squared and substantially counter-shaped to the seat 17, so as to be inserted in it in two positions, rotated 90 degrees with respect to one another around the third axis 16, corresponding to the locking position and to the closing position.

Advantageously, the means to stably keep the rotating element 15, unless an external intervention, in the locking position or in the closing position, further comprise elastic means 18, adapted to exert on the rotating element 15 a force pushing it towards the inside of the seat 17.

In advantageous embodiments, such as for example those illustrated in the attached figures, the rotating element 15 is at least partially housed below the base 61 of a handle 6a inverted U-conformed and fixed to the first upper surface 7 of the first section 2; in such case, the elastic means 18 preferably comprise a helicoidal spring 18a interposed between the base 61 and the rotating element 15, so as to push the latter towards the first upper surface 7, and thus towards the inside of the seat 17.

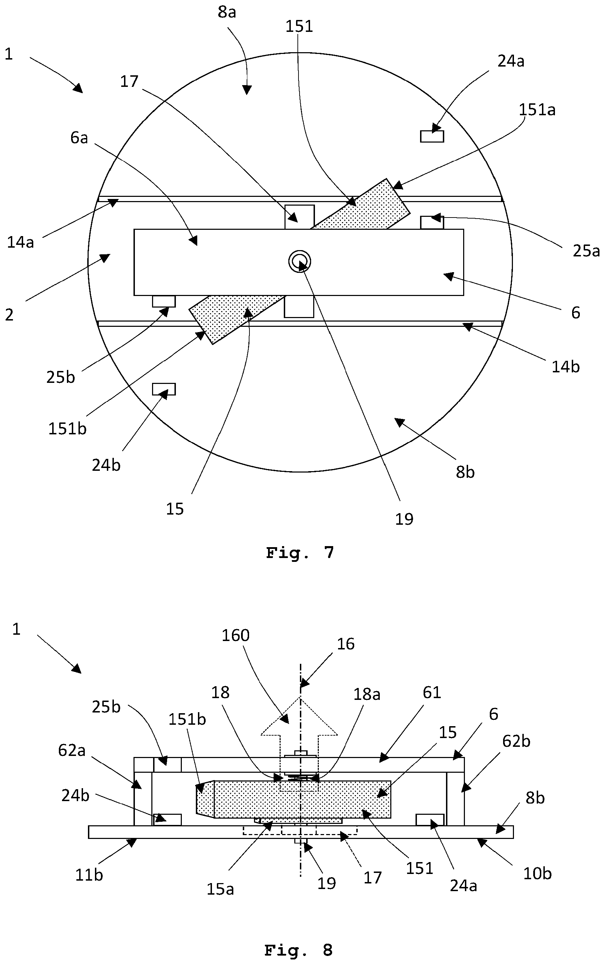

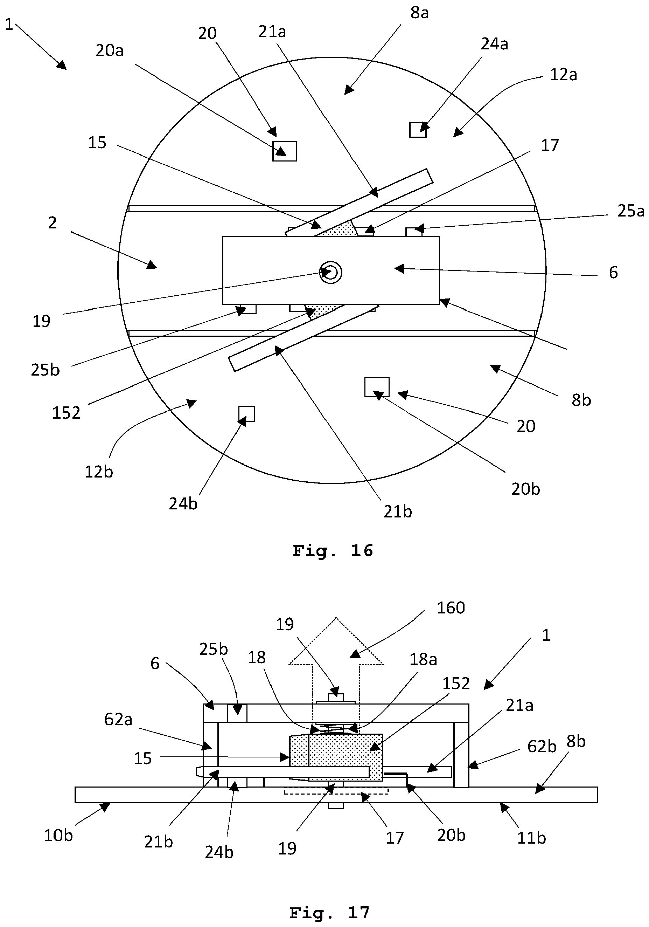

In order to lift the rotating element 15 and force the portion 15a of it out of the seat 17, so as to be able to rotate the rotating element 15 with respect to the third axis 16, therefore, the user needs to exert on the rotating element 15, for example by traction in a direction opposite to the first upper surface 7, a lifting force (schematized with an arrow 160 in figures 8 and 17) opposing to the elastic force exerted by the elastic means 18; once the portion 15a is inserted in the seat 17, therefore, the elastic means 18 keep such portion 15a stably inside the seat 17, unless the user exerts such lifting force 160.

Advantageously, the helicoidal spring 18a is kept in position by a spindle 19, around which such helicoidal spring 18a is arranged, fixed between the base 61 and the first section 2, coaxially to the third axis 16, and around which the rotating element 15 rotates.

In advantageous embodiments, such as for example those illustrated in figures 1 to 12, the rotating element 15 comprises a first block 151, advantageously having an elongated conformation, but not necessarily parallelepiped, hinged, in a central region of it, to the first upper surface 7 of the first central section 2, so as to rotate around the third axis 16.

In an advantageous embodiment, such as for example that illustrated in figures 1 to 12, wherein the lid 1 comprises the inverted U-conformed handle 6a, described above, the first block 151 can be advantageously positioned below the base 61 of the handle 6a, and centrally presents a through hole 15b, in which the spindle 19 is positioned, such that the first block 151 can freely rotate around such spindle 19; in such advantageous embodiment, the first block 151 is advantageously conformed and positioned such that, in the locking position, it protrudes, in plan, laterally to the base 61 and to the first section 2, so as to partially overlap, with its transverse ends 151a, 151b, the second sections 8a, 8b, and such that, in the closing position, the transverse ends 151a, 151b of such first block 151 are positioned between the arms 62a, 62b of the handle 6a, and therefore the first block 151 does not protrude from the first central section 2, allowing the rotation of the second sections 8a, 8b from the use position towards the storage position.

Advantageously, the first block 151 can comprise, on its side surface, openings, or seats, not illustrated, adapted to facilitate the grip and the rotation thereof by a user.

In advantageous embodiments, such as for example that illustrated in figures 13 to 21, the first removable fixing means comprise first locking means 20, present on the second upper surface 12a, 12b of the second sections 8a, 8b, configured to engage with the rotating element 15, when it is in the locking position, and to removably lock it to the second sections 8a, 8b, so as to removably lock the rotation of such second sections 8a, 8b with respect to the first section 2.

In an advantageous embodiment, such as for example that illustrated in figures 13 to 23b, the rotating element 15 comprises a second block 152, with a conformation preferably cubic, or of a square-based prism, hinged, in a central region of it, to the first upper surface 7 of the first central section 2, so as to rotate around the third axis 16.

In advantageous embodiments, such as for example those illustrated in figures 13 to 23a, wherein the lid 1 comprises the inverted U-conformed handle 6a, described above, the second block 152 can be advantageously positioned below the base 61 of the handle 6a, and centrally presents a through hole, in which the spindle 19 is positioned, such that the second block 152 can freely rotate around such spindle 19.

In the advantageous embodiment illustrated in figures 13 to 21, the rotating element 15 advantageously also comprises two side attachments 21a, 21b, having an elongated and preferably straight conformation, preferably sheet-shaped, protruding from two side faces opposite to one another of the second block 152, one on a side opposite to the other; such side attachments 21a and 21b are advantageously facing and close to the first upper surface 7 of the first section 2.

Advantageously, the two side attachments 21a, 21b are conformed and positioned so as to laterally protrude from the first section 2 and each to overlap a respective second section 8a, 8b, when the rotating element 15 is in the locking position, and not to protrude from the first section 2, so as to allow the rotation of the second sections 8a, 8b from the use position towards the storage position, when the rotating element 15 is in the closing position.

In such advantageous embodiment, illustrated in figures 13 to 21, the first locking means 20 comprise two first hooking elements 20a, 20b present on the second upper surface 12a, 12b of a respective second section 8a, 8b, configured to be fixed each to a respective side attachment 21a, 21b when it, with the rotating element 15 in the locking position, laterally protrudes from the first section 2 and overlaps a respective second section 8a, 8b, and to unhook from such side attachment 21a, 21b when the rotating element 15 returns in the closing position.

In an advantageous embodiment, as that illustrated in figures 13 to 21, the first hooking elements 20a, 20b are inverted-L shaped, and are fixed with a first branch of them respectively to the second upper surface 12a, 12b of a second section 8a, 8b, such that their second branch, perpendicular to the first, is arranged above a respective side attachment 21a, 21b when the rotating element 15 is in the locking position, so as to prevent, in such condition, the rotation of the respective second section 8a, 8b with respect to the first section 2.

In advantageous embodiments, such as for example those illustrated in figures 1 to 21, the lid 1 comprises second removable fixing means of the second sections 8a, 8b in the storage position; advantageously, such second removable fixing means comprise first magnetic fixing means 23 of the second sections 8a, 8b to the gripping means 6.

Advantageously, such first magnetic fixing means 23 can comprise first magnetic elements 24a, 24b, provided on the second upper surface 12a, 12b, and corresponding second magnetic elements 25a, 25b, provided on the gripping means 6 in a position such that, when the second sections 8a, 8b are in the storage position, the first magnetic elements 24a, 24b are magnetically attached to the second magnetic elements 25a, 25b, so as to magnetically constrain the respective second sections 8a, 8b to the gripping means 6.

Advantageously, the first magnetic elements 24a, 24b and the second magnetic elements 25a, 25b can both comprise magnets, or the first magnetic elements 24a, 24b (or vice versa the second magnetic elements 25a, 25b) can comprise a magnet, and the second magnetic elements 25a, 25b (or vice versa the first magnetic elements 24a, 24b), can comprise a ferromagnetic element.

Alternatively, in the case where the second magnetic elements 25a, 25b are magnets, the second sections 8a, 8b can be made of a ferromagnetic material, so that the first magnetic elements 24a, 24b coincide with the second sections 8a, 8b.

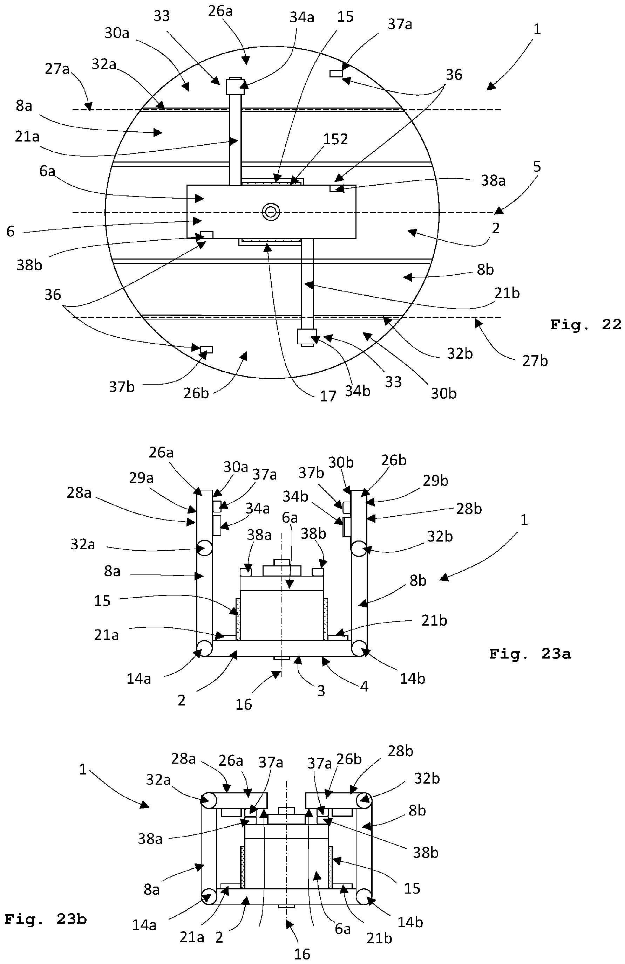

In advantageous embodiments, such as for example those illustrated in figures 22, 23a, 23b, the lid 1 comprises two third sections 26a, 26b, each hinged to a respective second section 8a, 8b so as to be able to rotate with respect to it around a fourth axis 27a, 27b, parallel to the first axis 5.

Advantageously, the third sections 26a, 26b each comprise a third lower surface 28a, 28b which comprises at least a third flat region 29a, 29b, and a third upper surface 30a, 30b, facing away from the third lower surface 28a, 28b.

Advantageously, the third sections 26a, 26b can rotate around the respective fourth axis 27a, 27b between an extended position illustrated for example in figures 22 and 23a, wherein each of the third sections 26a, 26b is arranged with the respective third flat region 29a, 29b coplanar with the second flat region 11a, 11b of the second section 8a, 8b to which such third section 26a, 26b is hinged, and a folded position, illustrated for example in figure 23b, wherein the third sections 26a, 26b are rotated in such a way that the respective third upper surfaces 30a, 30b face the gripping means 6, so as to reduce the overall size, in plan, of the lid 1.

The third sections 26a, 26b can be advantageously made, entirely or partially, of metal, for example stainless steel, plastic material, glass, etc.

In an advantageous embodiment, the lid 1 comprises two hinges 32a, 32b, for example so-called "book hinges" or "bar hinges" of known type, which connect to one another the second sections 8a, 8b to the respective third sections 26a, 26b, configured to allow the rotation of the third sections 26a, 26b between the extended position and the folded position, and vice versa, and to prevent at the same time the rotation of such third sections 26a, 26b, starting from the extended position, in the direction of rotation away from the folded position.

In an advantageous embodiment, the lid 1 comprises third removable fixing means of the third sections 26a, 26b in the extended position.

In an advantageous embodiment, illustrated for example in figures 22, 23a to 23b, the third removable fixing means also comprise the rotating element 15 previously described; particularly, in this advantageous case, the rotating element 15 advantageously comprises the second block 152 and the two side attachments 21a, 21b, also previously described, with the difference that in this advantageous case the side attachments 21a, 21b laterally protrude, when the rotating element 15 is in the locking position, from both the first section 2 and the second sections 8a, 8b, and therefore each overlap both a respective second section 8a, 8b and a respective third section 26a, 26b.

In this advantageous embodiment, the third removable fixing means comprise second locking means 33, present on the third upper surface 30a, 30b of the third sections 26a, 26b, configured to engage with the rotating element 15, when it is in the locking position, and to removably lock it to the third sections 26a, 26b, so as to removably lock the rotation of such third sections 26a, 26b with respect to the respective second sections 8a, 8b.

In such advantageous embodiment, illustrated in figures 22, 23a and 23b, the second locking means 33 comprise two second hooking elements 34a, 34b present on the third upper surface 30a, 30b of a respective third section 26a, 26b, configured to be fixed each to a respective side attachment 21a, 21b when it, with the rotating element 15 in the locking position, laterally protrudes from the first section 2 and overlaps a respective third section 26a, 26b, and to unhook from such side attachment 21a, 21b when the rotating element 15 returns in the closing position.

In an advantageous embodiment, as that illustrated in figures 22, 23a and 23b, the second hooking elements 34a, 34b are inverted L-conformed, and are fixed with a first branch of them respectively to the third upper surface 30a, 30b of a third section 26a, 26b, such that their second branch, perpendicular to the first, is arranged above a respective side attachment 21a, 21b when the rotating element 15 is in the locking position, so as to prevent, in such condition, the rotation of the respective third section 26a, 26b with respect to the respective second section 8a, 8b, thus also preventing the rotation of the latter with respect to the first section 2.

In an advantageous embodiment, the lid 1 comprises fourth removable fixing means of the third sections 26a, 26b in the folded position; advantageously, such fourth removable fixing means comprise second magnetic fixing means 36 of the third sections 26a, 26b to the gripping means 6.

Advantageously, such second magnetic fixing means 36 can comprise third magnetic elements 37a, 37b, provided on the third upper surface 30a, 30b of the third sections 26a, 26b, and corresponding fourth magnetic elements 38a, 38b, provided on the gripping means 6 in a position such that when the third sections 26a, 26b are in the folded position, the third magnetic elements 37a, 37b are magnetically attached to the fourth magnetic elements 38a, 38b, so as to magnetically constrain the respective third sections 26a, 26b to the gripping means 6.

Advantageously, the third magnetic elements 37a, 37b and the fourth magnetic elements 38a, 38b can both comprise magnets, or the third magnetic elements 37a, 37b (or vice versa the fourth magnetic elements 38a, 38b) can comprise a magnet, and the fourth magnetic elements 38a, 38b (or vice versa the third magnetic elements 37a, 37b), can comprise a ferromagnetic element.

Alternatively, in the case where the fourth magnetic elements 38a, 38b are magnets, the third sections 26a, 26b can be made of ferromagnetic material, so that the third magnetic elements 37a, 37b coincide with the third sections 26a, 26b themselves.

The operation of the lid according to the finding is illustrated below.

When the lid 1 is to be used to close a cooking container, such as for example a pot, a pan, a saucepan, etc., the second sections 8a, 8b of such lid 1 are positioned in the use position, and thus with the respective second flat regions 11a, 11b coplanar with each other and with the first flat region 4 of the first section 2; in the case where the lid 1 also comprises the third sections 26a, 26b, they are positioned in the extended position, wherein each of such third sections 26a, 26b is arranged with the respective third flat region 29a, 29b coplanar with the second flat region 11a, 11b of the second section 8a, 8b to which the third section 26a, 26b is hinged, and thus to the first flat region 4 of the first section 2.

Therefore, in such condition, referred to as "use condition", the lid 1 can be positioned to close the cooking container, positioning the first flat region 4, the second flat regions 11a, 11b and, in the case where the lid 1 also comprises the third sections 26a, 26b, also the third flat regions 29a, 29b (which are all coplanar to one another), at the access opening of the cooking container, typically lying on a plane.

Once ended the use of the lid, the second sections 8a, 8b can be positioned in the storage position, and, in the case where the lid 1 also comprises the third sections 26a, 26b, the latter can be positioned in the closing position; in this condition, referred to as "storage condition", the lid 1 presents a very reduced size in plan with respect to when it is in the use condition, and therefore can be stored and/or washed (both hand washed and possibly in the dishwasher), in a very easier manner with respect to the known-type lids, whose conformation is not modifiable, and thus which always present a large size in plan, equal to about that of the opening of the cooking container to be reclosed.

Therefore, the lid according to the finding was found to achieve the aim and the objects cited above.

Indeed, due to the possibility to rotate the second sections between the use position and the storage position, and the possible third sections between the extended position and the closed position, the size in plan of the lid can be modified depending on the desire to use it to close a cooking container or to wash or store it.

In particular, in the use condition the lid presents in plan its maximum size and allows to effectively close a cooking container, while in the storage condition the lid presents in plan its minimum size, and thus requires a reduced storage size with respect to that required by a known-type lid adapted to close the same cooking container.

Furthermore, the lid according to the finding is easy and intuitive to use, only requiring rotating the second sections (and the possible third sections), to pass from the use condition to the storage condition.

Furthermore, in the advantageous embodiments wherein the lid comprises the first magnetic fixing means (and possibly also the second magnetic fixing means), these allow to lock/unlock the lid in/from the storage condition in a very easy and quick manner.

Finally, it is clear that the lid according to the finding is susceptible of a number of modifications or variants, all falling within the finding; furthermore, all the details are replaceable by technically equivalent elements without departing from the scope of the attached claims.

## Claims

1. Lid (1) for cooking containers, **characterized by** comprising:
- a first section (2), central, which comprises a first lower surface (3) provided with at least a first flat region (4), said first section (2) presenting in plan an elongated conformation which develops longitudinally along a first axis (5), straight, parallel to said first flat region (4);
- gripping means (6) for lifting said lid (1), fixed to a first upper surface (7) of said first section (2), opposite to said first lower surface (3);
- two second sections (8a, 8b), hinged respectively to two opposite sides (2a, 2b) of said first section (2) so as to be able to rotate with respect to it around respective second axes (9a, 9b) parallel to said first axis (5) and spaced apart to one another, each of said second sections (8a, 8b) comprising a second lower surface (10a, 10b) which comprises at least a second flat region (11a, 11b), and a second upper surface (12a, 12b) facing away from said second lower surface (10a, 10b);
wherein said second sections (8a, 8b) can rotate around said respective second axes (9a, 9b) between a use position, wherein said second sections (8a, 8b) are arranged with the respective second flat regions (11a, 11b) coplanar with each other and with said first flat region (4) of said first section (2), and a storage position, wherein said second sections (8a, 8b) are rotated so that said respective second upper surfaces (12a, 12b) face each other and said gripping means (6), so as to reduce the overall size, in plan, of said lid (1).

2. Lid (1), as in claim 1, comprising two first hinges (14a, 14b), which respectively connect said second sections (8a, 8b) to said first section (2), configured to allow the rotation of said second sections (8a, 8b) from said use position to said storage position, and vice versa, and to prevent the rotation of said second sections (8a, 8b), starting from said use position, in the direction of rotation away from said storage position.

3. Lid (1), as in claim 1 or 2, comprising first removable fixing means (15, 20) of said second sections (8a, 8b) in said use position.

4. Lid (1), as in claim 3, wherein said first removable fixing means (15, 20) comprise a rotating element (15), hinged to said first section (2) and rotating, around a third axis (16) perpendicular to said first flat region (4), between a locking position, wherein said rotating element (15) protrudes from said first section (2) and partially overlaps said second sections (8a, 8b), preventing their rotation towards said storage position, and a closing position in which said rotating element (15) does not protrude from said first section (2), allowing the rotation of said second sections (8a, 8b) from said use position towards said storage position.

5. Lid (1), as in claim 4, wherein said first removable fixing means (15, 20) comprise first locking means (20), present on said second upper surface (12a, 12b) of said second sections (8a, 8b), configured to engage with said rotating element (15), when it is in said locking position, and to removably lock it to said second sections (8a, 8b), so as to removably lock the rotation of said second sections (8a, 8b) with respect to said first section (2).

6. Lid (1), as in one or more of the preceding claims, comprising second removable fixing means of said second sections (8a, 8b) in said storage position.

7. Lid (1), as in claim 6, wherein said second removable fixing means comprise first magnetic fixing means (23) of said second sections (8a, 8b) to said gripping means (6).

8. Lid (1), as in one or more of the preceding claims, comprising two third sections (26a, 26b), each hinged to a respective second section (8a, 8b), so as to be able to rotate relative to the same around a fourth axis (27a, 27b) parallel to said first axis (5), wherein each of said third sections (26a, 26b) comprises a third lower surface (28a, 28b) which comprises at least a third flat region (29a, 29b), and a third upper surface (30a, 30b) facing away from said third lower surface (28a, 28b), wherein said third sections (26a, 26b) can rotate around the respective fourth axis (27a, 27b) between an extended position, wherein each of said third sections (26a, 26b) is arranged with the respective third flat region (29a, 29b) coplanar with said second flat region (11a, 11b) of said second section (8a, 8b) to which said third section (26a, 26b) is hinged, and a folded position, wherein said third sections (26a, 26b) are rotated in such a way that the respective third upper surfaces (30a, 30b) face said gripping means (6), so as to reduce the overall size, in plan, of said lid (1).

9. Lid (1), as in claim 8, which comprises third removable fixing means of said third sections (26a, 26b) in said extended position.

10. Lid (1), as in claim 8 or 9, which comprises fourth removable fixing means of said third sections (26a, 26b) in said folded position.
